# EUROPEAN PATENT SPECIFICATION

(11) **EP 0 905 457 B1**
(45) Date of publication and mention of the grant of the patent: **26.01.2005**
(21) Application number: 98117101.0
(22) Date of filing: 10.09.1998
(51) Int. Cl.: F24H 1/40, F24H 8/00

(54) **Improved condensation premixing boiler for sanitary water and heating system**
Kombinierter Brennwertkessel mit Vormischbrenner
Chaudière à condensation avec prémélange pour systèmes mixtes

(30) Priority: 29.09.1997 IT MI972206
(43) Date of publication of application: 31.03.1999
(73) Proprietor: FERROLI S.p.A., I-37047 San Bonifacio (Verona) (IT)
(72) Inventor: Ferroli, Dante, 37047 San Bonifacio VR (IT)
(74) Representative: Cicogna, Franco

(56) References cited:
- WO-A-94/09326
- DE-A- 4 417 567
- DE-U- 9 212 347
- GB-A- 2 223 838
- US-A- 5 570 659
- PATENT ABSTRACTS OF JAPAN vol. 009, no. 172 (M-397), 17 July 1985 (1985-07-17) & JP 60 042593 A (TSUCHIYA SEISAKUSHO:KK), 6 March 1985 (1985-03-06)

## Description

### BACKGROUND OF THE INVENTION

The invention relates to an improved condensation premixing boiler for sanitary water and heating systems.

As is known, the production of hot water for general uses and, in particular, for a domestic use, has excited in the least year an increasing interest both by the end users and by the makers of heating means for meeting the recent market requirements relating to the enforcing rules, the consumes, noxious emissions, size, costs and so on.

Accordingly, the heating boiler, which constitute the core of any heating systems, have been subjected, in the last years, to several re-designing attempts by the industries of the field, in order to meet the requirements of an increasingly exacting market.

On the other hand, available boilers, while solving the above technical problem, have the following disadvantages.

They have a comparatively large size, frequently because of a unsatisfactory designing related to the apparatus lay-out.

While the noxious emissions have been greatly reduced with respect to prior boilers, they frequently do not meet the novel legal rules which are becoming increasingly restrictive both on a national and on a communitary scale.

Moreover, the mentioned boilers have a comparatively high power consume, because of a poor efficiency combustion, as well as high making and operation costs, because of the great amount of the used materials and a not fully optimal designing from the mere construction standpoint.

Another disadvantage is the comparatively small duration of prior boilers, caused by a time alteration of the features of the main components of said boilers, such as, for example, the heat exchangers.

Finally modern requirements, both of legal and of operation type, call for a capillary control of each parameter related to the operation of the boiler, thereby greatly increasing the complexity of the control electronics which, if not properly designed, can constitute a weak point of the overall heating system.

A condensation premixing boiler according to the preamble of claim 1 is known from DE-U-9212347. Ceramic burners are known from, e.g., US-A-5570659 or GB-A-2223838.

### SUMMARY OF THE INVENTION

Accordingly, the aim of the present invention is to overcome the above mentioned drawback of the prior art.

Accordingly, the invention specifically relates to an improved condensation premixing boiler, specifically designed for sanitary water and heating systems, of high technological contents, allowing to drastically reduce the overall costs and size, while providing a very reliable operation and reducing moreover the noxious emissions.

Briefly, in order to achieve the above mentioned and other aims, the invention provides an improved condensation premixing boiler, specifically designed for sanitary and heating systems, comprising at least a finned heat exchanger, the fins of which are provided with downwardly arranged and slanted notches to direct the dripping condensate away from the tube sheet of said heat exchanger, said tube sheet, in cooperation with the specifically designed fin contours, providing a plurality of thermal exchange stages; and at least a ceramic burner including a premixing block having at least a flange and one or more calibrated nozzles, a plurality of perforated plates upstream of the ceramic plates, where is performed the combustion, adapted to assure an even distribution of the air-gas mixture on the overall surface of said burner, and a support element including a sealing gasket allowing said ceramic plates to expand.

The improved condensation premixing boiler, specifically designed for sanitary water and heating systems according to the invention, is characterized by the features disclosed in Claim 1.

The improved condensation premixing boiler, specifically designed for sanitary water and heating systems according to the invention, provides the following advantages.

The constructional features of the used heat exchanger allow to obtain a very high thermal exchange for unitary surface and a very high duration and time holding of the features of said heat exchanger.

Owing to the high efficiency of the subject boiler, it is possible to reduce the weight of the heat exchanger with a rate from 35 to 40%, with a minimum duration or lifetime of 15 years and this also due to a specifically designed configuration of the boiler eliminating the so-called "dead regions" where the temperature could so increase to damage the heat exchanger.

The early "wearing-out" or corrosion phenomena caused by the combustion gases or fumes on the top of the heat exchanger and by the condensate material at the bottom thereof are reduced to very low levels.

The noxious emissions, in particular the nitrogen oxide emissions, are reduced to very small levels, if compared to those of prior boilers having the same power.

A noiseless operation, a good operation flexibility through a broad power range, together with the very reduced size of the combustion chamber, constitute further important advantages of the improved boiler according to the invention.

Moreover, the provision of particular constructional solutions has afforded a 30% reduction of the ceramic material necessary for making the burner.

The overall size has been drastically reduced over like power prior boilers, owing to a proper designing of the boiler lay-out, the single components thereof have been integrated and optimized.

The operation of the boiler according to the invention can be properly continuously monitored by carefully exploiting modern control logic means as commercially available.

From the above it should be easily apparent that the boiler according to the invention provides optimal cost/performance and cost/duration ratios, with great advantages both for the boiler maker and for the final user.

### BRIEF DESCRIPTION OF THE DRAWINGS

Further characteristics, advantages and details of the improved condensation premixing boiler, specifically designed for sanitary water and heating systems, according to the invention, will become more apparent from the following disclosure, with reference to the accompanying drawings, showing, by way of an indicative, but not limitative, example, a preferred embodiment of said boiler.

In the drawings:

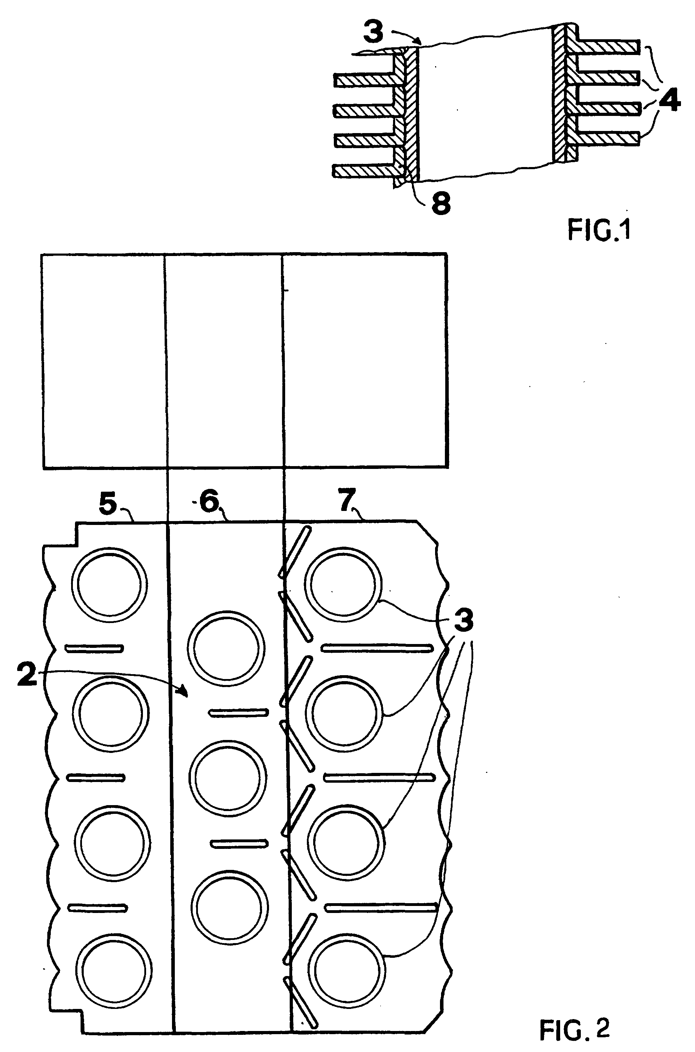

Figure 1 is a vertical cross-sectional view of a length of a pipe or tube included in the tube sheet of the heat exchanger of the boiler according to the invention;
Figure 2 is a partially cross-sectioned view of the thermal exchange stages of the heat exchanger included in the boiler according to the invention;

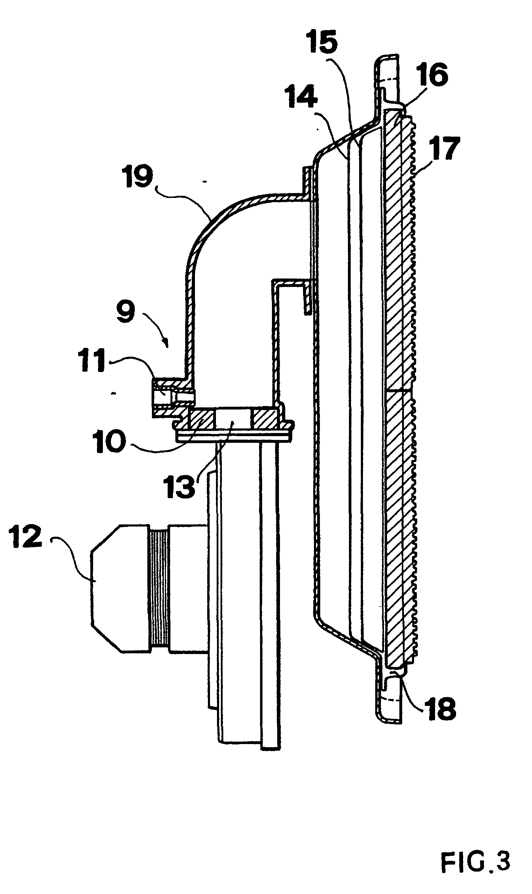

Figure 3 is a cross-sectional view of the air-gas mixing block included in the burner of the boiler according to the invention;

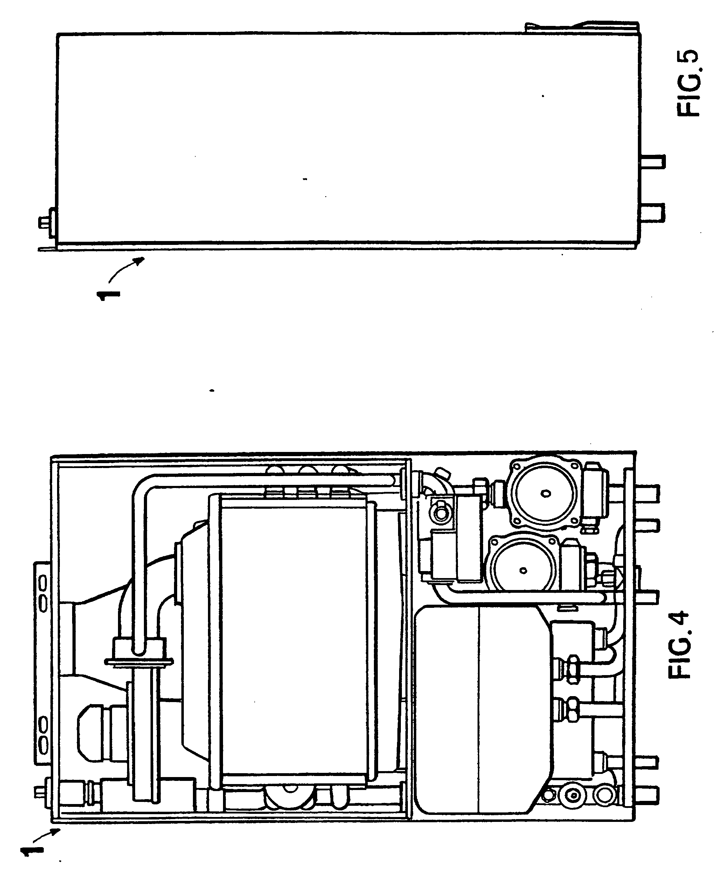

Figure 4 is a front view of the improved condensation premixing boiler, specifically designed for sanitary water and heating systems, according to the invention;
   and
Figure 5 is a side view of the boiler shown in Figure 4.

### DESCRIPTION OF THE PREFERRED EMBODIMENT

With reference to the number references of the above disclosed figures, the improved condensation premixing boiler 1, specifically designed for sanitary water and heating systems according to the present invention, comprises, in addition to the several known connection and supporting elements, a finned heat exchanger, preferably made of an aluminium alloy, a ceramic burner, of the premixing type, as well as a microprocessor control system.

Advantageously, the tube or pipe sheet 2 and fins 4 of said heat exchanger are so arranged as to provide, vertically through the fin, three thermal exchange stages 5, 6, 7. In particular, the thermal exchange stage 5 is a high temperature stage, the thermal exchange stage 6 is a partial condensation transition stage, and the thermal exchange stage 7 is a full condensation stage.

The fins 4 are provided with specifically designed notches or cut-outs, the positions, size and downward inclination of which will cause the dripping condensate material to be directed to those regions which would be very advantageous for an overall very efficient operation of the heat exchanger, i.e. away from the tube sheet 2, in order both to optimize the operation of the fins 4, the temperature of which is lower in the immediate proximity of each tube 3, and for limiting the formation, about said tubes 3, of a liquid film susceptible to reduce the thermal exchange.

Moreover, the spacing of the fins 4 would prevent the condensate drops from contacting two surfaces simultaneously, thereby preventing any re-evaporation phenomena susceptible to reduce the efficiency.

Moreover, the tubes and fins 4 have a great thickness, in order to prevent early "wearing-out" or corrosion phenomena both because of the fumes at the top of the heat exchanger, and because of the condensate material at the bottom thereof, which condensate material would cause a very acid reaction.

The arrangement of the tube sheet 2 on several rows, with the tubes thereof offset with respect to the fume flow, and the wave configuration of the top and bottom size of the fins will advantageously provide a constant and even cooling through the overall finned surface, thereby preventing any possible formations of "dead regions" of possibly high temperature, so as to prevent the heat exchanger from being deteriorated.

From the construction standpoint, the fins 4 will be molded together with collars 8 for increasing the tube 3 contacting cross-section, while defining distances of the fins.

After having assembled the fin pack, the tubes3 are subjected to an inner multiple-pass mandrel-expanding operation which progressively expands the tubes 3 causing them to forcibly contact the finned arrangement, thereby providing a perfect thermal transmission. Moreover, the mandrel-expanding operation will deform the tubes 3 to increase the inner turbulence of the water flowing inside said tubes or pipes 3, thereby increasing the thermal exchange between said water and tubes 3.

The pre-mixing ceramic burner comprises a premixing block 9 including a calibrated flange 10 having a round central hole 13 thereinto air blown by a fan 12 is supplied, whereas a calibrated nozzle 11 arranged on the top and transversely of said flange 10 operates to supply the gas: thus a perfect air-gas premixing and reduced size are assured.

Upstream of the burner ceramic plates 16, 17 are arranged two closely spaced perforated plates 14, 15 providing a perfectly even distributing of the air-gas mixture through the overall surface of the burner, said mixture being supplied by the premixing block 9 to the first perforated plate 14 through a duct 19 on the bottom thereof said calibrated flange 10 and nozzle 11 are connected.

Advantageously, the surface of the ceramic plates 16, 17 where the combustion is carried out, has a corrugated profile increasing the flame forming cross-section and simultaneously reducing the mutual inter-actions of the single flame fronts.

Finally, the burner included in the boiler 1 according to the invention comprises a support element supporting a suitably contoured gasket 18 allowing the ceramic plates 16, 17 to expand while holding the sealed condition.

The improved boiler 1 according to the invention comprises furthermore a control microprocessor system. This system will control the operating speed of the fan supplying the air-gas mixture, the sensing of the physical parameters on the inside and outside of the boiler 1, the boiler burner on-off switching, as well as the electromechanic elements and the safe operation of the overall boiler 1.

Said system is moreover provided of control logics PI and PID, respectively for the sanitary water and heating systems, as well as for series connecting a PC and for a remote control device, as well as for double probe climatic adjusting devices and user displays with related diagnostics and user interfacing means.

In this connection it should be pointed out that all of the components have been revised and improved in order to optimize to a maximum degree the exploitment of the available space, thereby providing a boiler having the same performance as prior boilers, with a volumetric space reduced by over 50%.

The shape and size of the several elements constituting the improved condensation premixing boiler, specifically designed for sanitary water and heating systems according to the present invention, can obviously change depending on requirements, without departing from the above disclosed inventive scope.

During the operation, after having switched on the fan 12 and the burner by a related command from the control logic means, the fumes will start to pass through the heat exchanger.

In the first thermal exchange stage 5 the fumes will be mainly cooled, in the second stage 6 they will be further cooled to start the condensation thereof, and in the third stage 7 the fumes will be fully condensed.

Thus, it is possible to limit to the fins 4 the self-heating and heat transmission effects from the top to the bottom portion, thereby in the third stage 7 it will be possible to provide a low temperature assuring a full and efficient fume condensation. In the meanwhile, it will be possible to hold a great temperature difference in the cooling water inside the fin pack.

A last aspect to be considered is that the combustion is performed on the broad porous surfaces of the ceramic plates, the flame forming a greatly even and compact "carpet" adapted to maximally limit the noxious emissions.

## Claims

1. A condensation premixing boiler, for sanitary water and heating system applications, comprising a finned heat exchangers including a tube sheet (2)-fin (4) assembly including a tube sheet and a plurality of fins, said fins (4) defining a plurality of downwardly arranged slanted notches adapted to direct a dripping condensate material away from said tube sheet (2), and a ceramic burner, **characterized in that** said ceramic burner comprises a premixing block (9) having a calibrated flange (10) with a calibrated combustion air inlet central hole (13) and a combustion gas inlet nozzle (11) arranged transversely with respect to said calibrated flange (10), a gas-air mixture conveying duct (9) having one end thereof communicating with said flange (10) and the other end thereof coupled to combustion ceramic plates (16, 17) supported by a support means-gasket (18) assembly, said assembly including a gasket allowing said ceramic plates (16, 17) to expand, and that said ceramic burner further comprises, upstream of said ceramic plates (16, 17), two closely spaced perforated plates (14, 15) adapted to assure an even distribution of said gas-air mixture through said combustion ceramic plates (16, 17).

2. A boiler according to Claim 1, **characterized in that** said fins (4) are molded integral with collar elements (8) spacing said fins from one another.

3. A boiler according to Claim 1, **characterized in that** said tube sheet (2) comprises a plurality of tubes (3) coupled to the heat exchanger by a mandrel-expanding operation so that said fins are coupled to said tubes by said operation.

4. A boiler according to Claims 1 to 3, **characterized in that** said tubes (3) of said tube sheet (2) are arranged in offset tube rows offset with respect to the fume flow, and that said fins (4) have undulated top and bottom sides.

5. A boiler according to one or more of the preceding claims, **characterized in that** said heat exchanger is made of an aluminium alloy.

6. A boiler according to one or more of the preceding claims, **characterized in that** said boiler further comprises an air fan (12) communicating with said calibrated flange (10).

7. A boiler according to one or more of the preceding claims, **characterized in that** said ceramic plates (16, 17) are corrugated.

8. A boiler according to one or more of the preceding claims, **characterized in that** said boiler (1) is adapted to be controlled by a microprocessor control system including separated control means for a sanitary water system and the heating system.

## Patentansprüche

1. Kombinierter Brennwertkessel mit Vormischbrenner, umfassend einen mit Rippen versehenen Wärmetauscher, der eine Heizrohrwand (2)-Rippen (4)-Baugruppe enthält, die eine Heizrohrwand und eine Mehrzahl von Rippen enthält, wobei diese Rippen (4) eine Mehrzahl abwärts weisender, schräggestellter Einkerbungen definieren, die dafür konfiguriert sind, eiw tropfendes Kondensatmaterial von der Heizrohrwand (2) wegzuleiten, sowie einen Keramikbrenner, **dadurch gekennzeichnet, dass** der Keramikbrenner Folgendes umfasst: einen Vormischblock (9), der einen kalibrierten Flansch (10) mit einem kalibrierten mittigen Verbrennungslufteinlassloch (13) und eine Verbrennungsgaseinlassdüse (11), die quer zu dem kalibrierten Flansch (10) angeordnet ist, aufweist; sowie einen Gas-Luftgemisch-Transportkanal (19), der mit einem Ende in strömungsmäßiger Verbindung mit dem Flansch (10) steht und dessen anderes Ende mit Verbrennungskeramikplatten (16, 17) verbunden ist, die von einer Stützmittel-Dichtungs (18)-Baugruppe gestützt werden, wobei diese Baugruppe eine Dichtung enthält, die es den Keramikplatten (16, 17) gestattet, sich auszudehnen; und **dadurch gekennzeichnet, dass** der Keramikbrenner des Weiteren stromaufwärts der Keramikplatten (16, 17) zwei eng beabstandete, mit Durchbrüchen versehene Platten (14, 15) umfasst, die so konfiguriert sind, dass sie eine gleichmäßige Verteilung des Gas-Luftgemisches durch die Verbrennungskeramikplatten (16, 17) hindurch gewährleisten.

2. Kessel nach Anspruch 1, **dadurch gekennzeichnet, dass** die Rippen (4) integral mit Abstandsringelementen (8) ausgebildet sind, welche die Rippen voneinander beabstanden.

3. Kessel nach Anspruch 1, **dadurch gekennzeichnet, dass** die Heizrohrwand (2) eine Mehrzahl von Rohren (3) umfasst, die dergestalt durch eine Dornaufweitungs-Operation mit dem Wärmetauscher verbunden sind, dass die Rippen durch diese Operation mit diesen Rohren verbunden sind.

4. Kessel nach den Ansprüchen 1 bis 3, **dadurch gekennzeichnet, dass** die Rohre (3) der Heizrohrwand (2) in versetzten Rohrreihen angeordnet sind; die relativ zur Rauchströmung versetzt sind, und dass die Rippen (4) wellenförmige Ober- und Unterseiten aufwiesen.

5. Kessel nach einem oder mehreren der vorangehenden Ansprüche, **dadurch gekennzeichnet, dass** der Wärmetauscher aus einer Aluminiumlegierung hergestellt ist.

6. Kessel nach einem oder mehreren der vorangehenden Ansprüche, **dadurch gekennzeichnet, dass** der Kessel des Weiteren ein Luftgebläse (12) umfasst, das mit dem kalibrierten Flansch (10) in strömungsmäßiger Verbindung steht.

7. Kessel nach einem oder mehreren der vorangehenden Ansprüche, **dadurch gekennzeichnet, dass** die Keramikplatten (16, 17) geriffelt sind.

8. Kessel nach einem oder mehreren der vorangehenden Ansprüche, **dadurch gekennzeichnet, dass** der Kessel (1) so konfiguriert ist, dass er durch ein Mikroprozessorsteuerungssystem gesteuert werden kann, das separate Steuerungsmittel für ein Sanitärwassersystem und das Heizsystem enthält.

## Revendications

1. Une chaudière à condensation avec pré-mélange, pour des applications avec de l'eau potable et avec un système de chauffage, comprenant un échangeur de chaleur à ailettes incluant un assemblage plaque tubulaire (2) - ailette (4) incluant une plaque tubulaire et une pluralité d'ailettes, lesdites ailettes (4) définissant une pluralité d'encoches disposées inclinées vers le bas, adaptées pour éloigner de ladite plaque tubulaire (2) un matériau de condensation s'égouttant, et un brûleur en céramique, **caractérisée en ce que** ledit brûleur en céramique comprend un bloc de pré-mélange (9) ayant une rondelle calibrée (10) avec un trou central calibré d'entrée d'air de combustion (13) et une buse d'entrée de gaz de combustion (11) disposée transversalement par rapport à ladite rondelle calibrée (10), un conduit de transport de mélange gaz-air (9) ayant l'une de ses extrémités communiquant avec ladite rondelle (10) et l'autre de ses extrémités couplée à des plaques de combustion en céramique (16, 17) supportées par un assemblage moyens de support-joint statique (18), ledit assemblage incluant un joint statique permettant auxdites plaques en céramique (16, 17) de s'étendre, et **en ce que** ledit brûleur en céramique comprend en outre, en amont desdites plaques en céramique (16, 17), deux plaques perforées légèrement espacées (14, 15) adaptées pour assurer une distribution uniforme dudit mélange gaz-air à travers lesdites plaques de combustion en céramique (16, 17).

2. Une chaudière selon la revendication 1, **caractérisée en ce que** lesdites ailettes (4) sont moulées intégralement avec des éléments formant collier (8) espaçant lesdites ailettes les unes des autres.

3. Une chaudière selon la revendication 1, **caractérisée en ce que** ladite plaque tubulaire (2) comprend une pluralité de tubes (3) couplés à l'échangeur de chaleur par une opération d'expansion au mandrin, de sorte que lesdites ailettes sont couplées auxdits tubes par ladite opération.

4. Une chaudière selon l'une des revendications 1 à 3, **caractérisée en ce que** lesdits tubes (3) de ladite plaque tubulaire (2) sont disposés en rangées de tubes décalées par rapport à la circulation des fumées, et **en ce que** lesdites ailettes (4) ont des côtés supérieur et inférieur ondulés.

5. Une chaudière selon une ou plusieurs des revendications précédentes, **caractérisée en ce que** ledit échangeur est fait d'un alliage d'aluminium.

6. Une chaudière selon une ou plusieurs des revendications précédentes, **caractérisée en ce que** ladite chaudière comprend en outre un ventilateur (12) communiquant avec ladite rondelle calibrée (10).

7. Une chaudière selon une ou plusieurs des revendications précédentes, **caractérisée en ce que** lesdites plaques en céramique (16, 17) sont ondulées.

8. Une chaudière selon une ou plusieurs des revendications précédentes, **caractérisée en ce que** ladite chaudière (1) est adaptée pour être commandée par un système de commande à microprocesseur incluant des moyens de commande séparés pour un système d'eau potable et le système de chauffage.
